# EUROPÄISCHE PATENTSCHRIFT

(11) **EP 0 680 998 B1**
(45) Veröffentlichungstag und Bekanntmachung des Hinweises auf die Patenterteilung: **08.07.1998**
(21) Anmeldenummer: 95106428.6
(22) Anmeldetag: 28.04.1995
(51) Int. Cl.: C08L 15/00, C08K 3/36, B60C 1/00

(54) **Kautschukmischung und Reifenkarkasse auf Basis derselben**
Rubber composition and tire carcass prepared therefrom
Composition de caoutchouc et carcasse de pneu basée sur cette composition

(30) Priorität: 05.05.1994 DE 4415720
(43) Veröffentlichungstag der Anmeldung: 08.11.1995
(73) Patentinhaber: Uniroyal Englebert Reifen GmbH, D-52068 Aachen (DE)
(72) Erfinder: Russell, Richard, Dr., B-4731 Eynatten (BE)

(56) Entgegenhaltungen:
- EP-A- 0 157 703
- GB-A- 2 213 490
- US-A- 4 357 432
- JOURNAL OF APPLIED POLYMER SCIENCE, Bd. 49, Nr. 6, 10.August 1993 NEW YORK US, Seiten 1115-1121, S VARUGHESE ET AL. 'Effect of mode of filler addition on the dynamic properties of epoxidised natural rubber - cis-1,4-polybutadiene rubber blend'

## Beschreibung

Die vorliegende Erfindung betrifft eine mit Schwefel vulkanisierbare Kautschukmischung, ein Verfahren zu ihrer Herstellung, besonders luftundurchlässige Reifenkarkassen auf Basis dieser Kautschukmischung sowie Reifen umfassend diese Reifenkarkassen.

Der Reifen ist ein wichtiges Konstruktionsteil am Fahrzeug. Er stellt ein Federungselement dar, das die Motorkräfte zur Fortbewegung auf die Fahrbahn überträgt. Das eigentliche Federungselement beim Fahren ist allerdings nicht der Gummi, sondern die darin unter Druck eingeschlossene Luft. Der Reifen soll aber selbstfederende Eigenschaften besitzen, um die Federungseigenschaften der Druckluft möglichst noch zu unterstützen.

Es ist daher ein allgemeines Bestreben leistungsfähige Reifen zur Verfügung zu stellen, bei denen die Textil- oder Metallkarkasse auf allen Seiten von einem Gummi umgeben ist, der eine hohe Luftundurchlässigkeit besitzt, so daß der Reifeninnendruck gehalten wird und die Federungseigenschaften des Reifens über lange Zeit erhalten bleiben.

Bei der Karkasse, dem eigentlichen Festigkeitsträger, handelt es sich üblicherweise um ein Gewebe aus Rayon, Polyester, Polyamid, Polyaramid oder Stahl, welches mit einem Kautschuk gummiert ist. Die Karkasse allein besitzt jedoch keine ausreichende Luftundurchlässigkeit, weshalb zusätzlich auf der Innenseite der Reifen eine Innenplatte (Innenseele) angebracht ist, die die erforderliche Luftundurchlässigkeit gewährleistet. Bei diesen Innenplatten handelt es sich um ein luftundurchlässiges Material aus Halobutylkautschuk. Diese Halobutylkautschuke sind nicht nur teuer, sondern bringen auch Probleme bei deren Verarbeitung und Entsorgung mit sich. Darüberhinaus besitzen sie eine große Hysterese,
was einen hohen Rollwiderstand des Reifens zur Folge hat.

Die GB-A-2 198 138 beschreibt eine Kautschuk-(Gummi)-Zusammensetzung für eine Karkasse, die aus wenigstens 20 Gew.-Teilen pro 100 Gew.-Teilen Kautschuk aus einem Styrol-Butadien Copolymer mit einem hohen Styrolgehalt oder aus emulsionspolymerisierten Styrol-Butadien-Copolymeren mit einem Styrolgehalt von wenigstens 30 Gew.-Teilen pro 100 Gew.-Teilen Kautschuk und 40 Gew.-Teilen pro 100 Gew.-Teilen des Kautschuks aus Elastomeren oder einer Kombination von Elastomeren bestehen.

Die GB-A-2 213 490 beschreibt eine Kautschukzusammensetzung für eine Karkasse, die anstelle des Styrol-Butadien-Copolymers mit dem hohen Styrolanteil, die Verwendung von epoxidiertem Polyisopren vorschlägt, welches wenigstens 20 mol% Epoxy-Gruppen enthält. Bei dem Polyisopren handelt es sich um Synthese- oder Naturkautschuk.

Aus dem "Journal of Applied Polymer Science", Bd 49, Nr. 6, 10. August 1993 New York US, S. 1115 - 1121 und der US 4 357 432 sind ebenfalls epoxidierte Polymere bekannt, die für die Herstellung von Kautschukmischungen verwendet werden.

Ausgehend davon, war es nun eine Aufgabe der vorliegenden Erfindung, eine Kautschukmischung zur Verfügung zu stellen, welche für besonders luftundurchlässige Reifenkarkassen eingesetzt werden kann. Insbesondere war es ein Ziel der vorliegenden Erfindung, die Dicke der Innenplatte zu verringern oder auf diese ganz zu verzichten, ohne daß dies Auswirkungen auf die Luftdurchlässigkeit des Reifens oder dessen Laufeigenschaften hat. Insbesondere sollten die Reifen, die solche Reifenkarkassen umfassen, einen verringerten Rollwiderstand aufweisen im Vergleich zu den Reifen, die einen üblichen Aufbau, d.h. übliche Karkassen üblicher Dicke aufweisen, und auf Kautschukmischungen basieren, die nur Ruß als Füllstoff enthalten.

Die Aufgabe wurde erfindungsgemaß gelöst durch eine Karkasse für pneumatische Fahrzeugreifen, die in eine Kautschukmisch gebettete Festigkeitsträger enthält, wobei die Kautschukmischung eine mit Schwefel vulkanisierbare Kautschukmischung umfassend Naturkautschuk und/oder Synthesekautschuk und epoxidiertes Polyisopren ist, welches wenigstens 20 mol% Epoxy-Gruppen enthält, ein Füllmaterial, gegebenenfalls wenigstens ein Dien-Elastomer als weiteres Polymer, sowie weitere übliche Zusätze, dadurch gekennzeichnet, daß das Füllmaterial feinverteilte, gefällte Kieselsäure alleine oder eine Kombination von feinverteilter, gefällter Kieselsäure mit Ruß ist und die Kautschukmischung kein Silankupplungsmittel enthält.

Es wurde überraschenderweise gefunden, daß auf die Verwendung von Silankupplungsmitteln, die üblicherweise in Kautschukmischungen, die Kieselsäure enthalten in Anteilen von wenigstens 15 Gew.-Teilen pro 100 Gew.-Teilen Kautschuk enthalten sind, vollständig verzichtet werden kann. Es ist bekannt, daß Silankupplungsmittel, die für die Kieselsäure enthaltenden Mischungen wesentlich sind, die Mischzeit für die Herstellung der Kautschukmischung verlängern, verglichen mit Mischungen, die Ruß als einziges verstärkendes Füllmaterial enthalten. Die Ursache hierfür ist, daß die Behandlung der Kieselsäureoberfläche mit dem Silankupplungsmittel auf einer Stufe während des Mischens vor der Zugabe gewisser anderer Mischungsbestandteile, wie beispielsweise Zinkoxid, zu erfolgen hat. Diese anderen Mischungsbestandteile würden ansonsten die Behandlung der Kieselsäure mit dem Silan behindern. Kautschukmischungen, die Ruß enthalten benötigen keine, die Rußoberfläche aktivierende Zusätze da Ruß, im Gegensatz zu Kieselsäure gegenüber Kautschuk inhärent aktiv ist.

Die erfindungsgemäße Kautschukmischung enthält das Füllmaterial in einer Menge von 10-100 Gew.-Teilen, vorzugsweise 20-60 Gew.-Teile, bezogen auf 100 Gew.-Teile der Polymere (Kautschuk-Polymere, epoxidiertes Polyisopren und gegebenenfalls zusätzliche Dien-Elastomere).

Gemäß der Erfindung kann grundsätzlich jede feinverteilte, gefällte Kieselsäure eingesetzt werden, wie sie üblicherweise bei der Herstellung von Kautschukmischungen eingesetzt wird und die bei dem auf diesem Gebiet tätigen Fachmann als bekannt vorausgesetzt werden kann. In diesem Zusammenhang sei insbesondere auf die in der EP-A-0 501 227, EP-A-0 157 703 und der DE-A-2 410 014 beschriebenen Kieselsäuren verwiesen.

Als gefällte und feinverteilte Kieselsäuren können demnach in der erfindungsgemäßen Zusammensetzung solche eingesetzt werden, die eine BET-Fläche von 40-350 m²/g, insbesondere von 100-250 m²/g, eine CTAB-Fläche von 50-350 m²/g, vorzugsweise von 100-250 m²/g und einem mittleren Teilchendurchmesser von 10-150 µm, vorzugsweise 10-100 µm und eine DBP-Absorption 50-350 ml/100 g, vorzugsweise 150-250 ml/100 g besitzen.

Besonders bevorzugt sind jedoch Kieselsäuren mit besonderer Morphologie, die erhältlich sind durch Umsetzung von Alkalisilikat mit Mineralsäuren bei Temperaturen von 60°C bis 95°C unter Aufrechterhaltung eines pH-Wertes von 7,5 bis 10,5 unter kontinuierlicher Rührung, die je nach Bedarf intensiviert werden kann, und unter Einstellung eines Feststoffgehaltes in der Fällungssuspension von 90 bis 120 g/l, einer anschließenden Rücksäuerung auf pH-Werte ≤ 5, Filtration, Trocknung und bei Bedarf einer Vermahlung und/oder Granulation.

Diese Kieselsäuren sind dadurch gekennzeichnet, daß sie N₂-Oberflächen (Areameter, Fa. Ströhlein, gemäß ISO 5794/Annex D) von 35 m²/g bis 350 m²/g, insbesondere 100 bis 200 m²/g, bei einem BET/CTAB-Verhältnis von 0,8 bis 1,2 (pH 9, gemäß Jay, Janzen und Kraus in "Rubber Chemistry and Technology" 44 (1971) 1287), besitzen und gleichzeitig, wie unten in der Tabelle I angegeben, je nach Oberflächenbereich ein Porenvolumen, gemessen mittels Quecksilberporosimetrie (DIN 66 133), Silanolgruppendichten, gemessen in Form der Sears-Zahlen (G.W. Sears, Analyt. Chemistry 12, 1981-83 (1956)) sowie eine mittlere Aggregatgröße, gemessen mittels Photonenkorrelationsspektroskopie, besitzen:

**Tabelle I**

| N₂-Oberfläche [m²/g] | Hg-Porosimetrie [ml/g] | Sears-Zahl V₂ [ml] | Mittlere Aggregatgröße [nm] |
|---|---|---|---|
| < 100 | 2,5 - 3,4 | 6 - 12 | 900 - 1500 |
| 100 - 150 | 2,4 - 3,2 | 8 - 15 | 400 - 850 |
| 150 - 200 | 1,8 - 2,6 | 10 - 16 | 300 - 550 |
| > 200 | 1,6 - 2,3 | 12 - 20 | 250 - 520 |

Die Kieselsäuren sind ferner gekennzeichnet durch gute Vermahlbarkeit, wiedergegeben durch die mittlere Teilchengröße nach Malvern-Laserbeugung [D (4,3)] von ≤ 11 µm, insbesondere ≤ 10 µm, gemessen nach Vermahlung auf einer Alpine-Kolloplex-Prallstiftmühle (Z 160) bei einer Durchsatzleistung von 6 kg/h.

Diese Vermahlbarkeit kann charakterisiert werden u.a. durch die Energie, die benötigt wird, um eine bestimmte Teilchenfeinheit zu erzielen oder umgekehrt durch die Teilchenfeinheit, die sich einstellt, wenn ein Mahlaggregat bei gleicher Leistung und gleichem Produktdurchsatz betrieben wird. Letztere ist der Einfachheit wegen die Methode der Wahl. Als Mühlentyp wird eine Alpine-Kolloplex-Prallstiftmühle (Z 160) eingesetzt und bei einem konstanten Produktdurchsatz von 6 kg/h betrieben.
Zur Charakterisierung der Teilchenfeinheit wird der mittlere, volumengewichtete Teilchendurchmesser MTG [D(4,3)] aus der Messung mittels Laserbeugung gewählt (Fa. Malvern Instruments, Modell 2600c).
Für weitere Einzelheiten zu dieser Kieselsäure mit der besonderen Morphologie wird auf die DE-A-4 334 201 verwiesen.

Der Ruß, der gemäß der Erfindung in der Kautschukmischung zur Anwendung kommt, ist ein üblicherweise zu diesem Zweck verwendeter handelsüblicher Ruß. Herkömmliche Ruße für die erfindungsgemäße Anwendung besitzen eine Dibutylphthalat-Absorption (DBPA-Zahl) von 50 bis 180 cm³/100g (ASTM D2414), eine Iodzahl von 10 bis 250 g/kg (ASTM D 1510) sowie eine CTAB-Zahl von 5 bis 150 m³/g (ASTM D 3765).

Der Ruß wird in Kombination mit feinverteilter, gefällter Kieselsäure als weiterem Füllmaterial der Kautschukmischung zugesetzt. Das Verhältnis der eingesetzten Volumina von Kieselsäure zu Ruß beträgt 1:4 bis 5:1, vorzugsweise 1:2 bis 3:1.

Erfindungsgemäß können Naturkautschuk (cis-1,4-Polyisopren), Synthesekautschuk (synthetisch hergestelltes cis-1,4-Polyisopren mit 90 bis 98 % cis-1,4-Polyisopren-Anteil) oder Gemische aus Natur- und Synthese-Kautschuk eingesetzt werden.

Die Kautschukmischung gemäß der Erfindung enthält ferner ein epoxidiertes Polyisopren, welches ausgewählt ist aus epoxidiertem Naturkautschuk, epoxidiertem Synthesekautschuk oder Gemischen derselben. Derartige epoxidierte Polyisoprene enthalten 20 bis 80 mol%, vorzugsweise 40 bis 60 mol% Epoxy-Gruppen. Der Anteil dieses epoxidierten Polyisoprens beträgt 10 bis 80 Gew.-%, vorzugsweise 30 bis 70 Gew.-%, bezogen auf die Gesamtmenge der Polymere bestehend aus den Kautschuk-Polymeren, epoxidiertem Polyisopren und gegebenenfalls zusätzlichen Polymeren. Epoxidierte Polyisoprene mit verschiedensten Anteilen an Epoxy-Gruppen sowie Verfahren zu deren Herstellung sind dem Fachmann bekannt.

Die erfindungsgemäße Kautschukmischung kann ferner bis zu 70 Gew.-Teile, bezogen auf 100 Gew.-Teile des Gesamtpolymer-Gehalts eines Dien-Elastomers enthalten, das ausgewählt ist aus Polybutadien, Copolymeren aus Isopren und Butadien oder Copolymeren aus Styrol und Butadien. Diese Dien-Elastomere können mit üblichen, dem Fachmann bekannten Verfahren durch Lösungs- oder Emulsionspolymerisation hergestellt sein.

Die Kautschukmischung kann ferner die üblichen Zusätze in der üblichen Dosierung enthalten, wie insbesondere Weichmacher (Mineralöle), Alterungsschutzmittel, Schwefel, Vulkanisationsbeschleuniger (Sulfenamide, Thiazole, Guanidine) sowie weitere, jedoch andere Füllstoffe als die oben genannten und Aktivatoren (z.B. Stearinsäure, Zinkoxid).

Die Erfindung betrifft ferner ein Verfahren zur Herstellung der oben beschriebenen, mit Schwefel vulkanisierbaren Kautschukmischung durch
1) Mischen von Naturkautschuk, Synthesekautschuk oder Gemischen von Natur- und Synthesekautschuk, einem epoxidierten Polyisopren, welches wenigstens 20 mol% Epoxy-Gruppen enthält und gegebenenfalls wenigstens einem Dien-Elastomer als weiterem Polymer, mit einem Füllmaterial, das ausgewählt ist aus feinverteilter Kieselsäure alleine oder feinverteilter Kieselsäure in Kombination mit Ruß sowie der üblicherweise verwendeten Zusätze mit Ausnahme des Vulkanisationssystems unter gleichzeitigem Erwärmen der Zusammensetzung auf eine Temperatur bis zu 180°C,
2) Zumischen des Vulkanisationssystems bei einer Temperatur unterhalb der Vulkanisationstemperatur,
wobei das Verfahren in Abwesenheit von Silankupplungsmittel durchgeführt wird.

Hinsichtlich der Bedeutung des Kautschuks, des epoxidierten Polyisoprens des weiteren Dien-Elastomers, des Füllstoffs (Kieselsäure und gegebenenfalls Ruß), der üblichen Zusätze und des Vulkanisationssystems wird auf die obigen Ausführungen verwiesen.

Die Durchführung der Mischvorgänge und der Vulkanisation kann in den dem Fachmann bekannten Apparaturen (z.B. in Knetern, Extrudern) erfolgen. In der ersten Stufe des Mischens sollte eine Temperatur von wenigstens 130°C und vorzugsweise eine Temperatur zwischen 145 und 170°C eingestellt werden.

Das Verfahren kann während des Mischens ferner auch so geführt werden, daß das Gemisch zunächst auf die vorgegebene Temperatur erwärmt und dann wieder auf eine Temperatur unterhalb der Vulkanisationstemperatur abgekühlt wird. Dieser Zyklus ist wenigstens einmal zu durchlaufen und kann gegebenenfalls mehrfach wiederholt werden.

Die erfindungsgemäße oben beschriebene Kautschukmischung kann nach dem Vulkanisieren in Gegenwart eines geeigneten Vulkanisationssystems unter üblichen, dem Fachmann bekannten Bedingungen zur Herstellung von ein- oder mehrlagigen Karkassen für pneumatische Fahrzeugreifen verwendet werden. Diese Karkassen können insbesondere für Innenplatten-frei pneumatische Fahrzeugreifen eingesetzt werden.

Die vorliegende Erfindung betrifft daher auch geformte Körper, welche die erfindungsgemäße ausgehärtete Kautschukmischung umfassen, insbesondere Festigkeitsträger (Karkasse), die mit der erfindungsgemäßen ausgehärteten Kautschukmischung gummiert (beschichtet) sind.

Die Erfindung betrifft ferner pneumatische Fahrzeugreifen umfassend wenigstens eine erfindungsgemäße Karkasse aus einem textilen und/oder metallischen Gewebe, welche auf allen Seiten mit der erfindungsgemäßen, ausgehärteten Kautschukmischung beschichtet ist, wobei die Karkasse eine erhöhte Undurchlässigkeit gegenüber Gasen, insbesondere Luft aufweist, so daß bei Reifen, die eine solche Karkasse umfassen, auf die Innenplatte vollständig verzichtet werden kann. Die Textilkarkasse besteht üblicherweise bei PKW-Reifen aus 1 bis 2 Karkassenlagen.

Das Material des Festigkeitsträgers (Gewebe, Cord) ist ausgewählt aus Rayon, Polyestern, Polyamid, Polyaramid oder Stahl. Die ausgehärteten Kautschukmischungen können ferner in Fördergurten, Dichtungen, Keilriemen, Schläuchen und Schuhsohlen Verwendung finden.

Die erfindungsgemäßen, silankupplungsmittelfreien Kautschukzusammensetzungen können, wie in den nachfolgenden Beispielen gezeigt, zur Herstellung von Karkassen für pneumatische Reifen eingesetzt werden, die nicht nur eine erhöhte Undurchlässigkeit (Impermeabilität) gegenüber Gasen und insbesondere gegenüber Luft aufweisen, sondern darüberhinaus einen verminderten Rollwiderstand besitzen, verglichen mit einem Reifen üblicher Bauart, der eine Karkasse aus einer Kautschukzusammensetzung des Standes der Technik (GB-A-2 213 490) umfasst.

Die vorliegende Erfindung wird durch die nachfolgenden Beispiele erläutert, ohne jedoch darauf beschränkt zu sein.

### Beispiele:

In den nachfolgenden Beispielen wurde als epoxidiertes Polyisopren wurde ENR 50 (epoxidierter Naturkautschuk mit 50 mol% Epoxy-Gruppen) und als Kieselsäure Ultrasil VN3 (Handelsprodukt der Firma DEGUSSA, Deutschland) eingesetzt. Bei dem Ruß handelt es sich um die Qualität (GPF) N 660 (DBPA-Zahl = 90 cm³/100g, Iodzahl = 38 g/kg, CTAB-Zahl = 35 m³/g).

Die gemäß der Erfindung einsetzbaren Kieselsäuren mit besonderer Morphologie können gemäß den nachfolgenden Beispielen 1 bis 3 hergestellt werden:

### Beispiel 1: Herstellung einer Kieselsäure im N₂-Oberflächenbereich von ≤ 100 m²/g

In einem Bottich werden unter Rühren 43,5 m³ heißes Wasser und so viel handelsübliches Natronwasserglas (Gewichtsmodul 3,42, Dichte 1.348) vorgelegt, bis pH 8,5 erreicht ist. Unter Aufrechterhaltung einer Fälltemperatur von 88°C und pH 8,5 werden nun 16,8 m³ des gleichen Wasserglases und Schwefelsäure (96%ig) in 150 Minuten gleichzeitig an gegenüberliegenden Stellen zugegeben. Es stellt sich ein Feststoffgehalt von 100 g/l ein. Danach wird weiter Schwefelsäure bis zum Erreichen von pH < 5 zugegeben. Der Feststoff wird auf Filterpressen abgetrennt, gewaschen und der Pressenteig einer Sprühtrocknung oder Drehrohrofentrocknung unterzogen und vermahlen oder auch nicht vermahlen.

Das erhaltene Produkt hat eine N₂-Oberfläche von 80 m²/g, eine Aggregatgröße von 1320 nm und eine Vermahlbarkeit von 10 µm. Die Sears-Zahl (V₂) beträgt 9,0 und die Hg-Porosimetrie 2,7 ml/g.

### Beispiel 2: Herstellung einer Kieselsäure im N₂-Oberflächenniveau von 100-150 m²/g

Es wird gemäß Beispiel 1 verfahren, mit der Ausnahme, daß in der Fällvorlage und während der Fällung ein pH-Wert von 9,0 konstant gehalten wird. Nach 135 Minuten stellt sich ein Feststoffgehalt in der Fällungssuspension von 93 g/l ein.

Die Kieselsäure hat eine N₂-Oberfläche von 120 m²/g, eine Vermahlbarkeit von 8,8 µm, eine Sears-Zahl von 9,1 bei einer Aggregatgröße von 490 nm und einem Hg-Porenvolumen von 2,85 ml/g.

### Beispiel 3: Herstellung einer Kieselsäure im N₂-Oberflächenniveau von 150-200 m²/g

Es wird gemäß Beispiel 1 verfahren mit der Ausnahme, daß in der Fällvorlage und während der Fällung ein pH-Wert von 9,5 konstant gehalten wird. Nach 135 Minuten stellt sich ein Feststoffgehalt in der Fällungssuspension von 93 g/l ein.

Die Kieselsäure hat eine N₂-Oberfläche von 184 m²/g, eine Vermahlbarkeit von 8,7 µm, eine Sears-Zahl von 15,7 bei einer Aggregatgröße von 381 nm und einem Hg-Porenvolumen von 2,26 ml/g.

### Beispiel:

| | Karkassen-Zusammensetzung nach GB-A-2 213 490 | Karkassen-Zusammensetzung nach der Erfindung |
|---|---|---|
| Naturkautschuk | 40 pphr | 40 pphr |
| ENR 50 | 60 pphr | 60 pphr |
| Ruß GPF N 660 | 41 pphr | 20 pphr |
| Kieselsäure | -- | 21 pphr |
| Mineralöl | 6 pphr | 6 pphr |
| Stearinsäure | 1.5 pphr | 1.5 pphr |
| Zinkoxid | 5.0 pphr | 5.0 pphr |
| MBS Beschleuniger | 1.5 pphr | 1.5 pphr |
| Schwefel | 1.5 pphr | 1.5 pphr |
| (pphr= Gewichtsteile pro 100 Gewichtsteile Kautschuk(rubber)). | | |

Die Werte für die Luftundurchlässigkeit der beiden Zusammensetzungen sind:

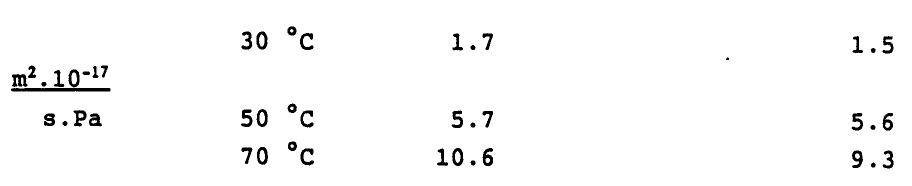

Darüberhinaus wurde festgestellt, daß ein Reifen bestehend aus der erfindungsgemäßen Karkasse gemäß dem Beispiel einen gegenüber einem Reifen mit einer Karkasse gemäß GB-A-2 213 490 um 2% verringerten Rollwiderstand aufweist. Dieser Wert kann durch entsprechenden Einsatz von Kieselsäure mit der besonderen Morphologie noch weiter gesteigert werden.

## Patentansprüche

1. Karkasse für pneumatische Fahrzeugreifen, die in eine Kautschukmischung gebettete Festigkeitsträger enthält, wobei die Kautschukmischung eine mit Schwefel vulkanisierbare Kautschukmischung umfassend Naturkautschuk und/oder Synthesekautschuk und epoxidiertes Polyisopren ist, welches wenigstens 20 mol% Epoxy-Gruppen enthält, ein Füllmaterial, gegebenenfalls wenigstens ein Dien-Elastomer als weiteres Polymer sowie weitere übliche Zusätze, dadurch gekennzeichnet, daß das Füllmaterial feinverteilte, gefällte Kieselsäure alleine oder eine Kombination von feinverteilter, gefällter Kieselsäure mit Ruß ist und die Kautschukmischung kein Silankupplungsmittel enthält.

2. Karkasse nach Anspruch 1, dadurch gekennzeichnet, daß sie das Füllmaterial in einer Menge von 10-100 Gew.-Teilen, bezogen auf 100 Gew.-Teile der Gesamtmenge Polymer, enthält.

3. Karkasse nach Anspruch 1 oder 2, dadurch gekennzeichnet, daß sie feinverteilte, gefällte Kieselsäure enthält, die eine BET-Fläche von 40 bis 350 m²/g, eine CTAB-Fläche von 50 bis 350 m²/g, einen mittleren Teilchendurchmesser von 10 bis 150 µm sowie eine DBP-Zahl von 50-350 ml/100 g besitzt.

4. Karkasse nach Anspruch 1 oder 2, dadurch gekennzeichnet, daß sie Kieselsäure einer besonderen Morphologie enthält, die eine N₂-Oberfläche 35 m²/g bis 350 m²/g, bei einem BET/CTAB-Verhältnis von 0,8 bis 1,2 besitzen und gleichzeitig wie unten angegeben, je nach Oberflächenbereich ein Porenvolumen, gemessen mittels Quecksilberporosimetrie (DIN 66 133), Silanolgruppendichten, gemessen in Form der Sears-Zahlen sowie eine mittlere Aggregatgröße, gemessen mittels Photonenkorrelationsspektroskopie, besitzen:
| N₂-Oberfläche [m²/g] | Hg-Porosimetrie [ml/g] | Sears-Zahl V₂ [ml] | Mittlere Aggregatgröße [nm] |
|---|---|---|---|
| < 100 | 2,5 - 3,4 | 6 - 12 | 900 - 1500 |
| 100 - 150 | 2,4 - 3,2 | 8 - 15 | 400 - 850 |
| 150 - 200 | 1,8 - 2,6 | 10 - 16 | 300 - 550 |
| > 200 | 1,6 - 2,3 | 12 - 20 | 250 - 520 |

5. Karkasse nach Anspruch 4, dadurch gekennzeichnet, daß die Kieselsäure eine gute Vermahlbarkeit, wiedergegeben durch die mittlere Teilchengröße nach Malvern-Laserbeugung [D (4,3)] von ≤ 11 µm, insbesondere ≤ 10 µm, gemessen nach Vermahlung auf einer Alpine-Kolloplex-Prallstiftmühle (Z 160) bei einer Durchsatzleistung von 6 kg/h aufweist.

6. Karkasse nach einem oder mehreren der Ansprüche 1 bis 5, dadurch gekennzeichnet, daß das Volumenverhältnis von Kieselsäure zu dem Ruß 1:4 bis 5:1 beträgt.

7. Karkasse nach einem oder mehreren der Ansprüche 1 bis 6, dadurch gekennzeichnet, daß das epoxidierte Polyisopren ausgewählt ist aus epoxidiertem Naturkautschuk oder Synthesekautschuk oder deren Gemischen.

8. Karkasse nach Anspruch 7, dadurch gekennzeichnet, daß der Anteil des epoxidierten Polyisoprens 10 bis 80 Gew.-% ist, bezogen auf die Gesamtmenge aller Polymere in der Kautschukmischung.

9. Karkasse nach einem oder mehreren der Ansprüche 1 bis 15, dadurch gekennzeichnet, daß sie bis zu 70 Gew.-Teile, bezogen auf 100 Gew.-Teile des Polymeren-Gehalts, von wenigstens einem anderen Dien-Elastomer enthält, das ausgewählt ist aus Polybutadien, Isopren-Butadien-Copolymeren und Styrol-Butadien-Copolymeren.

10. Verfahren zur Herstellung der Karkasse, wie in einem oder mehreren der Ansprüche 1 bis 9 definiert, durch
1) Mischen von Naturkautschuk, Synthesekautschuk oder Gemischen von Natur- und Synthesekautschuk, einem epoxidierten Polyisopren, welches wenigstens 20 mol% Epoxy-Gruppen enthält und gegebenenfalls wenigstens einem Dien-Elastomer als weiterem Polymer, mit einem Füllmaterial, das ausgewählt ist aus feinverteilter Kieselsäure alleine oder feinverteilter Kieselsäure in Kombination mit Ruß sowie der üblicherweise verwendeten Zusätze mit Ausnahme des Vulkanisationssystems unter gleichzeitigem Erwärmen der Zusammensetzung auf eine Temperatur bis zu 180°C,
2) Zumischen des Vulkanisationssystems bei einer Temperatur unterhalb der Vulkanisationstemperatur,
wobei das Verfahren in Abwesenheit von Silankupplungsmittel durchgeführt wird.

11. Verfahren nach Anspruch 10, dadurch gekennzeichnet, daß das Mischen wenigstens einen aufeinanderfolgenden Erwärmungs- und Abkühlungszyklus umfasst.

12. Verwendung der Karkasse, wie in einem oder mehreren der Ansprüche 1 bis 9 definiert, in pneumatischen Fahrzeugreifen die keine Innenplatte aufweisen.

## Claims

1. Carcase for pneumatic vehicle tyres, which carcase contains reinforcing members embedded in a rubber mixture, the rubber mixture being a rubber mixture which is vulcanisable with sulphur and includes natural rubber and/or synthetic rubber and epoxidised polyisoprene, which contains at least 20 mol % epoxy goups, a filling material, possibly at least one diene elastomer as an additional polymer and additional conventional additives, characterised in that the filling material is finely divided, precipitated silica on its own or is a combination of finely divided, precipitated silica with carbon black, and the rubber mixture contains no silane coupling agent.

2. Carcase according to claim 1, characterised in that it contains the filling material in a quantity of between 10 and 100 parts by wt., relative to 100 parts by wt. of the total quantity of polymer.

3. Carcase according to claim 1 or 2, characterised in that it contains finely divided, precipitated silica, which has a BET area of between 40 and 350 m²/g, a CTAB area of between 50 and 350 m²/g, an average particle diameter of between 10 and 150 µm and a DBP number of between 50 and 350 ml/100 g.

4. Carcase according to claim 1 or 2, characterised in that it contains silica of a particular morphology, which has an N₂ surface of between 35 m²/g and 350 m²/g, with a BET:CTAB ratio of between 0.8 and 1.2, and at the same time, as quoted below, depending on the surface region, a pore volume measured by means of mercury porosimetry (DIN 66 133), silanol group densities measured in the form of Sears numbers, and an average aggregate size measured by means of photon correlation spectroscopy:
| N₂ Surface [m²/g] | Hg Porosimetry [ml/g] | Sears Number V₂ [ml] | Average Aggregate Size [nm] |
|---|---|---|---|
| < 100 | 2,5 - 3,4 | 6 - 12 | 900 - 1500 |
| 100 - 150 | 2,4 - 3,2 | 8 - 15 | 400 - 850 |
| 150 - 200 | 1,8 - 2,6 | 10 - 16 | 300 - 550 |
| > 200 | 1.6 - 2,3 | 12 - 20 | 250 - 520 |

5. Carcase according to claim 4, characterised in that the silica has a good grindability, reproduced by the average particle size according to Malvern laser diffraction [D (4.3)] of ≤ 11 µm, more especially ≤ 10 µm, measured after being ground on an Alpine Colloplex impact-type pinned disc mill (Z 160) with a throughput capacity of 6 kg/h.

6. Carcase according to one or more of claims 1 to 5, characterised in that the volume ratio of silica to carbon black is between 1:4 and 5:1.

7. Carcase according to one or more of claims 1 to 6, characterised in that the epoxidised polyisoprene is selected from epoxidised natural rubber or synthetic rubber or their mixtures.

8. Carcase according to claim 7, characterised in that the proportion of epoxidised polyisoprene is between 10 and 80 % by wt., relative to the total quantity of all of the polymers in the rubber mixture.

9. Carcase according to one or more of claims 1 to 8, characterised in that it contains up to 70 parts by wt., relative to 100 parts by wt. of the polymer content, of at least one other diene elastomer, which is selected from polybutadiene, isoprene-butadiene copolymers and styrene-butadiene copolymers.

10. Method of producing the carcase, as defined in one or more of claims 1 to 9, by
1) mixing natural rubber, synthetic rubber or mixtures of natural and synthetic rubber, an epoxidised polyisoprene which contains at least 20 mol % epoxy groups, and possibly at least one diene elatomer as an additional polymer, with a filling material which is selected from finely divided silica on its own or from finely divided silica in combination with carbon black as well as the conventionally used additives with the exception of the vulcanisation system, whilst simultaneously heating the composition to a temperature up to 180° C, and
2) admixing the vulcanisation system at a temperature below the vulcanisation temperature,
the method being effected in the absence of silane coupling agents.

11. Method according to claim 10, characterised in that the mixing includes at least one sequential heating and cooling cycle.

12. Use of the carcase, as defined in one or more of claims 1 to 9, in pneumatic vehicles tyres which have no internal plate.

## Revendications

1. Carcasse pour pneus de véhicules gonflés à l'air comprenant un support de résistance noyé dans un mélange de caoutchouc, ledit mélange de caoutchouc étant un mélange de caoutchouc vulcanisable avec du soufre contenant du caoutchouc naturel et/ou du caoutchouc de synthèse et du polyisoprène époxydé contenant au moins 20 % molaires de groupes époxy, une matière de charge, le cas échéant au moins un élastomère diène en tant que polymère supplémentaire, ainsi que d'autres additifs usuels, caractérisée en ce que la matière de charge est de l'acide silicique précipité finement divisé seul ou une combinaison d'acide silicique précipité finement divisé et de noir de fumée, et en ce que le mélange de caoutchouc ne contient pas d'agent de couplage à base de silane.

2. Carcasse selon la revendication 1, caractérisée en ce qu'elle contient la matière de charge à raison de 10 à 100 parties en poids ramené à 100 parties en poids de la quantité totale de polymères.

3. Carcasse selon la revendication 1 ou la revendication 2, caractérisé en ce qu'elle contient un acide silicique précipité finement divisé présentant une surface BET de 40 à 350 m²/g, une surface CTAB de 50 à 350 m²/g, un diamètre de particule moyen de 10 à 150 µm, et un indice DBP de 50 à 350 ml/100 g.

4. Carcasse selon la revendication 1 ou la revendication 2, caractérisée en ce qu'elle contient de l'acide silicique ayant une morphologie particulière avec une surface N₂ allant de 35 m²/g à 350 m²/g pour un ratio BET/CTAB compris entre 0,8 et 1,2 et, dans le même temps, par un volume poreux en fonction de la plage de surface mesuré par porosimétrie au mercure (DIN 66 133), par des densités de groupes silanol mesurées sous la forme d'indices Sears, ainsi que par une taille d'agrégats moyenne mesurée par spectroscopie à corrélation photonique tels qu'indiqués ci-dessous.
| Surface N₂ [m²/g] | Porosimétrie Hg [ml/g] | Indice Sears V₂ [ml] | Taille d'agrégat moyenne [nm] |
|---|---|---|---|
| < 100 | 2,5 - 3,4 | 6 - 12 | 900 - 1500 |
| 100 - 150 | 2,4 - 3,2 | 8 - 15 | 400 - 850 |
| 150 - 200 | 1,8 - 2,6 | 10 - 16 | 300 - 550 |
| > 200 | 1,6 - 2,3 | 12 - 20 | 250 - 520 |

5. Carcasse selon la revendication 4, caractérisée en ce que l'acide silicique possède une bonne aptitude au broyage, exprimée par la granulométrie moyenne, déterminée par diffraction laser Malvern [D (4,3)] de ≤ 11 µm, et notamment ≤ 10 µm après broyage au moyen d'un broyeur Carr à chocs de type Alpine Kolloplex (Z 160) à un débit de passage de 6 kg/h.

6. Carcasse selon l'un ou plusieurs des revendications 1 à 5, caractérisée en ce que le ratio volumique de l'acide silicique sur le noir de fumée est compris entre 1/4 et 5/1.

7. Carcasse selon l'un ou plusieurs des revendications 1 à 6, caractérisée en ce que le polyisoprène époxydé est choisi parmi le caoutchouc naturel époxydé, le caoutchouc de synthèse époxydé ou des mélanges de ceux-ci.

8. Carcasse selon la revendication 7, caractérisée en ce que la proportion de polyisoprène époxydé est comprise entre 10 et 80 % en poids, ramenée à la quantité totale de tous les polymères dans le mélange de caoutchouc.

9. Carcasse selon l'un ou plusieurs des revendications 1 à 15, caractérisée en ce qu'elle contient jusqu'à 70 parties en poids, ramené à 100 parties en poids de la teneur en polymères, d'au moins un autre élastomère diène choisi parmi le polybutadiène, les copolymères d'isoprène et de butadiène et les copolymères de styrène et de butadiène.

10. Procédé de fabrication de la carcasse telle que définie dans l'une ou plusieurs des revendications 1 à 9, consistant à :
1) mélanger du caoutchouc naturel, du caoutchouc de synthèse ou des mélanges de caoutchouc naturel et de caoutchouc de synthèse, un polyisoprène époxydé contenant au moins 20 % molaires de groupes époxy, et le cas échéant au moins un élastomère diène comme polymère supplémentaire, avec une matière de charge choisie entre un acide silicique précipité finement divisé seul ou un acide silicique précipité finement divisé en combinaison avec du noir de fumée ainsi qu'avec les additifs habituellement utilisés à l'exception du système de vulcanisation, en élevant simultanément la température de la composition jusqu'à 180 °C ;
2) incorporer au mélange le système de vulcanisation à une température inférieure à la température de vulcanisation ;
ledit procédé s'effectuant en l'absence d'agents de couplage à base de silane.

11. Procédé selon la revendication 10, caractérisé en ce que le mélangeage comprend au moins un cycle de montée en température et un cycle de refroidissement consécutifs.

12. Utilisation de la carcasse telle que définie dans l'une ou plusieurs des revendications 1 à 9 dans un pneu de véhicule gonflé à l'air n'utilisant pas de plaque interne.
